Europäisches Patentamt

European Patent Office

Office européen des brevets

(11) Publication number: 0 368 545
A1

## (12) EUROPEAN PATENT APPLICATION

(21) Application number: 89311281.3

(22) Date of filing: 01.11.89

(51) Int. Cl.5: G01S 13/76, G01S 13/82, G01S 7/02, H01Q 25/00

(30) Priority: 03.11.88 GB 8825740

(43) Date of publication of application:
16.05.90 Bulletin 90/20

(84) Designated Contracting States:
ES

(71) Applicant: NATIONAL RESEARCH DEVELOPMENT CORPORATION
101 Newington Causeway
London SE1 6BU(GB)

(72) Inventor: Smith, David
53 Humberhill Drive
Lanchester Durham DH7 0HH(GB)
Inventor: Jefferson, Robin Linton
16 Edge Dell Stoney Haggs Scarborough
North Yorkshire Y012 4LL(GB)

Inventor: Korolkiewicz, Edward
21 Elm Court Wickham
Newcastle Upon Tyne NE16 4PS(GB)
Inventor: Blythe, Philip Thomas
144 Biddlestone Road Heaton
Newcastle Upon Tyne NE6 5SP(GB)
Inventor: Hills, Peter John
5 Rectory Terrace Gosforth
Newcastle Upon Tyne NE3 1YY(GB)
Inventor: Givens, John Gordon
6 Ridley Mill
Stocksfield Northumberland NE43 7QT(GB)

(74) Representative: Hasler, Christopher
Patent Department National Research
Development Corporation 101 Newington
Causeway
London SE1 6BU(GB)

(54) Improvements in the transmission and reception of electric signals carrying information.

(57) A system for the transmission of data between a stationary unit and simple mobile unit, with low power consumption, usually located on a vehicle is described. To transmit data from the stationary unit, two carrier waves, polarised, orthogonally and modulated with the data and its inverse are transmitted from antennas 12 and 13. These waves are received by a dual polarised antenna 21 of the mobile unit, demodulated by detectors 26 and 27 and passed to a summation device 28 to provide a bipolar signal with a relatively high signal to noise ratio for a microcomputer 30. For data transmission from the mobile unit to the stationary unit, the antenna 13 transmits an unmodulated carrier wave having a single polarisation. This wave is "reflected" and modulated with data to be transmitted by the mobile unit. If a data "zero" is to be transmitted, the received carrier is switched to the detectors 26 and 27, but if a data "one" is to be sent then the received signal is switched by radio frequency switches 24 and 25 along lines 22, 23 and 31 and retransmitted with a polarisation normal to that of the unmodulated carrier.

Fig.1

# IMPROVEMENTS IN THE TRANSMISSION AND RECEPTION OF ELECTRIC SIGNALS CARRYING INFORMATION

The present invention relates to the transmission and reception of electric signals carrying information between two locations, one of which may be moving in relation to the other.

More particularly, although not exclusively, the invention relates to a novel method of transmission and reception of electric signals carrying information between two locations, one of which may be a roadside interrogation unit and the other of which may be a mobile transponder incorporating a micro-computer.

A large number of different data communication systems for vehicles have previously been proposed using: infrared, satellite, radio (including microwave) and inductive loop technologies. These known systems may be briefly categorised as follows:-

(a) Automatic vehicle identification,
(b) Automatic vehicle monitoring,
(c) Route guidance and information,
(d) Automatic toll collection.

The method and system for the transmission and reception of electric signals carrying information according to the present invention may be concerned with any one or more of the above categories. Specifically, it is concerned with automatic toll collection.

Out of a large number of prior proposals, the following known systems are now briefly discussed.

Firstly a two-way microwave transponder system operating at 2.45 GHz is described in US Patent 4,390,880.

The system uses a fixed beacon unit and transponder, which can be mounted on a moving vehicle, to provide the passage of data in both directions for either information or identification.

Transmission of data from the beacon unit to the transponder is achieved by modulating, for example by amplitude modulation, a first high frequency carrier. This signal is received by the transponder and demodulated using a standard technique.

Transmission of data from the transponder to the roadside unit is achieved by using the transponder to "reflect" and frequency modulate a second high frequency carrier wave generated by the beacon unit. The first and second carrier waves are orthogonally polarised with respect to one another.

When the transponder is required to transmit data, the beacon unit radiates the second carrier in unmodulated form. This carrier is received by the transponder and is passed to a frequency shift keyed modulator. This modulator is formed from a constant 360° phase shifter and is the subject of US Patent Application 4,358,765. Data to be transmitted is used to drive the modulator and the modulated signal is retransmitted from the transponder.

Isolation of the received carrier wave and retransmitted data signal is therefore achieved by means of modulation technique and more specifically by frequency shift keying.

Secondly, optical data transmission by means of polarisation shift keying has been disclosed in two articles published in Electronic Letters 1987, 23 pp 421-422 and 1988, 24 pp 642-643. In both articles a mono-mode optical fibre is used in conjunction with polarisation shift keying to improve the signal to noise performance. Use is made of polarisation shift keying whereby data is used to amplitude modulate a light source into one of two polarisations, E1 and E0. Reception of this signal is by mixing with a local oscillator source (a laser diode) and by use of a polarisation beam splitter. This separates the two light channels and final detection is by means of photodiodes. The two outputs of the photodiodes are fed to a summing junction.

Transmission of data by amplitude shift keying (ASK) is well known and can provide reliable exchange of data with minimum equipment. However the signal to noise performance and noise immunity of the system is not very good. Considerable improvement can be made by using a two channel communication system.

In a two channel system, one channel carries data and the second channel carries the inverse, not data. Examples of this are frequency shift keying (FSK), where the two channels are separated by a frequency delta F and phase shift keying (PSK) where the channels are separated by phase. Both of these methods offer significant improvements over ASK but both require more complex demodulating circuits that are incompatible with the space and power requirements imposed by the concept of the low profile microwave transponder.

It is therefore an object of the present invention to overcome, at least partially, the problems and disadvantages of the known systems referred to above by providing a simple system in which the signal to noise ratio of the communications link is improved.

According to a first aspect of the present invention there is provided apparatus for transmitting and receiving information between two locations having
a first unit comprising

means for generating an input signal and its inverse relating to information to be transmitted, and means for transmitting first and second orthogonally polarised waves by radio, the first and second waves conveying the input signal and its inverse; and

a second unit comprising

means for receiving the first and second orthogonally polarised radio waves and deriving first and second signals representing the input signal and its inverse, and

means for combining the first and second signals to obtain an output signal.

The first unit may include means for transmitting a continuous third wave having a single polarisation when information is to be transmitted from the second unit. The secont unit then includes means for receiving the third wave and providing a consequent continuous unmodulated carrier signal from the third wave,

modulation means for modulating the carrier signal in accordance with information to be transmitted from the second unit, and

means for transmitting a fourth wave to the first unit with a polarisation orthogonal to the third wave, the fourth wave conveying the modulated carrier signal.

In this specification and claims "radio" includes operation up to and including microwave frequencies, but not transmission by waveguides for substantially the whole distance between the locations. Indeed it is an advantage of the invention that it can be used between units which move relative to one another because radio transmission is used rather than any form of fixed guide or physical link.

The invention also has the advantage that it produces a significant reduction in the complexity of the signal processor, for example no local oscillator or intermediate frequency stage is required in the second unit. In addition the signal to noise ratio can be improved by 3 dBs as compared with a conventional ASK system.

Furthermore, in the retransmit mode, separation of the unmodulated carrier and returned data transmission is achieved through the use of the two orthogonal polarisations.

Where the invention is used in connection with vehicles the first unit is usually stationary and the second is mounted on a vehicle, although the units do not usually work in fixed pairs, since one first unit works with many second units as vehicles pass by, and each second unit may encounter many different first units.

The invention also extends to separate first units, for example beacons, and separate second units, for example transponders.

According to a second aspect of the present invention there is provided a method of transmitting and receiving information between two locations, one of which may be moving in relation to the other, said method including: at the first location the steps of:

(a) generating a signal and its inverse relating to the information to be transmitted;

(b) modulating said signals onto two carriers which are orthogonally polarised with respect to one another for transmission to said second location; and at the second location the steps of:

(c) detecting the two carriers transmitted from said first location;

(d) demodulating the two carriers in order to obtain the original signal and its inverse; and

(e) summating said two demodulated signals in order to obtain a bipolar output signal.

Preferably, the first location is a roadside beacon and the second location is a transponder on a road vehicle.

Additionally, according to a third aspect of the present invention there is provided a method of retransmission between the second location and the first location, including the steps of:

(f) transmitting a continuous unmodulated carrier on a single polarisation from said first location;

(g) receiving the unmodulated carrier in a modulator of the second location;

(h) driving the modulator by the retransmit data previously stored in said second location;

(i) generating a carrier containing a modulated signal relating to the information to be retransmitted;

(j) transmitting the modulated carrier on a second single polarisation orthogonal to said first single polarisation back to the first location.

Preferably the above aspects of the present invention may be carried out by a beacon unit having a pair of orthogonally polarised antennas constituting the first location and a transponder having detecting, demodulating and summation means constituting the second location. The transponder may also include a micro-strip antenna, a pair of radio frequency switches, a signal processing stage and a micro-computer. This allows the transponder to act on information received and to retransmit the required or relevant data stored in the micro-computer.

The pair of orthogonally polarised antennas on the beacon unit may for example comprise a pair of horn antennas whose spacing may be adjustable in order to permit maximum radio frequency isolation or a dual polarised array.

The system preferably operates at a frequency of 2.45 GHz, but could operate at frequencies up to 100 GHz or possibly more.

Where a physical link can be used, radio communication between the locations need not be used and guided transmission, by waveguide for example, may be used at frequencies up to 100 GHz.

Certain embodiments of the present invention will now be described by way of example with reference to the accompanying drawings, in which:-

Figure 1 is a block schematic diagram of a roadside beacon and transponder on board a road vehicle, utilising the transmission and reception system of the present invention;

Figure 2 is a series of timing waveforms which assist in understanding the operation of the system shown in Figure 1, in both the writing and read phases;

Figure 3 is a block schematic diagram of a car park which illustrates an alternative use to which the transmission and reception system of the present invention can be put;

Figure 4a is a front elevation view of a dual polarised horn antenna for use in a roadside beacon;

Figure 4b is a side elevation of one of the two horns of Figure 4a; and

Figure 5 is a diagrammatic view of a dual polarised micro-strip array which may be used instead of the horn antenna in a roadside beacon.

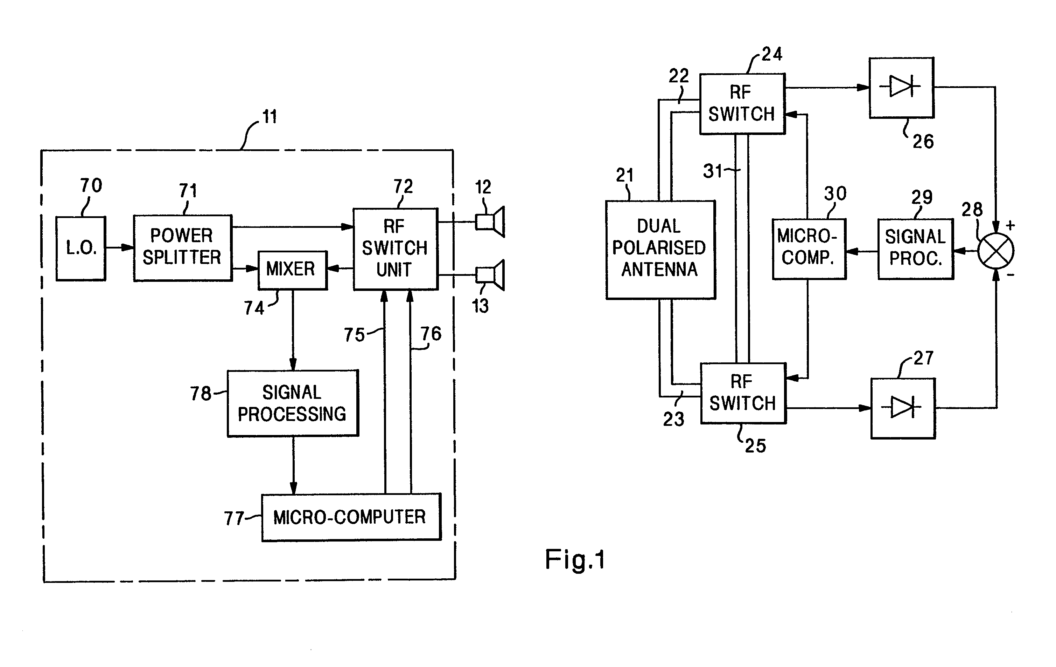

Referring first to Figure 1, the system for the transmission and reception of electric signals carrying information between a roadside beacon and a transponder on a road vehicle includes a beacon unit shown on the left-hand side and the transponder shown on the right-hand side.

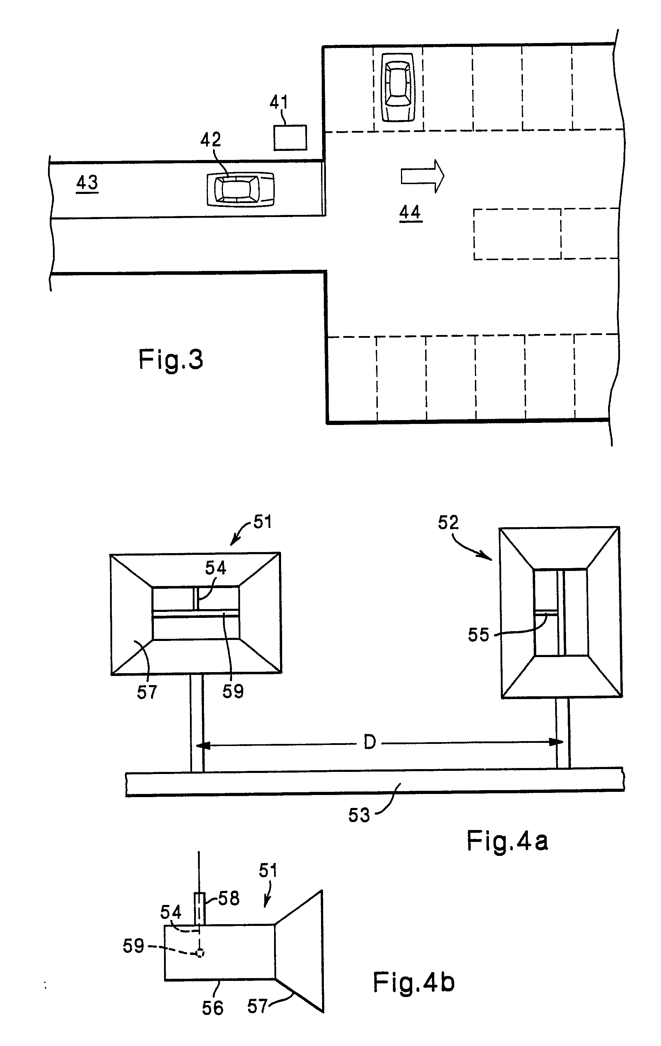

The beacon unit comprises a roadside beacon unit 11 and a pair of antennas 12 and 13, which are shown in greater detail in Figure 4.

In the beacon a local oscillator 70 operating at 2.45 GHz feeds a power splitter 71 having one output connected to a radio frequency switch unit 72 and another output connected to a mixer 74. The switch unit either connects the power splitter 71 direct to both the antennas 12 and 13 in a transmit mode under the control of signals on connections 75 and 76, respectively, as determined by a micro-computer 77, or in a receive mode, connects the power splitter to the antenna 12 and connects the antenna 13 to another input of the mixer 74. A signal processor 78 processes signals from the mixer 74 for the micro-computer 77.

The transponder comprises a dual polarised micro-strip antenna 21 (described in more detail below), micro-strip matching lines 22 and 23 for two channels A and B respectively, a pair of radio frequency switches 24 and 25, a pair of diode detectors 26 and 27, a summation device 28 to add together the detected and demodulated signals in the respective channels A and B, and a signal processor 29 which amplifies filter signals for a micro-computer 30. The micro-computer may comprise a Motorola MC68HC805C4 micro-processor. The switches 24 and 25 are connected by a micro-strip line 31.

One preferred construction of the pair of antennas 12 and 13 is shown in greater detail in Figure 4a. Two horn type antennas 51 and 52 are arranged so that their respective feeds 54 and 55 are at right angles to one another, the feed 54 transmitting vertically polarised signals, whilst the feed 55 transmits horizontally polarised signals. A side view of the antenna 51 is shown in Figure 4b where a waveguide portion 56 and a flare portion 57 can be seen. The feed 54 is a probe connected at one end to the centre conductor of a coaxial line 58 and at the other to a bar 59. The antenna 52 has the same construction but is rotated by $90°$. The horns 51 and 52 are mounted on a bracket 53 and means (not shown) are provided for adjusting the spacing between the horns so as to permit maximum radio frequency isolation between the two horns to be achieved. The horns may be designed as described by J.F. Aurand in 'Pyramidal horns, Part 1: Analysis of directivity as a function of aperture phase errors', IEEE antennas and propagation society newsletter, June 1989, pp 33-34; and 'Pyramidal horns, Part 2: Design of horns for any desired gain and aperture phase errors', IEEE antennas and propagation society newsletter, August 1989, pp 25-28.

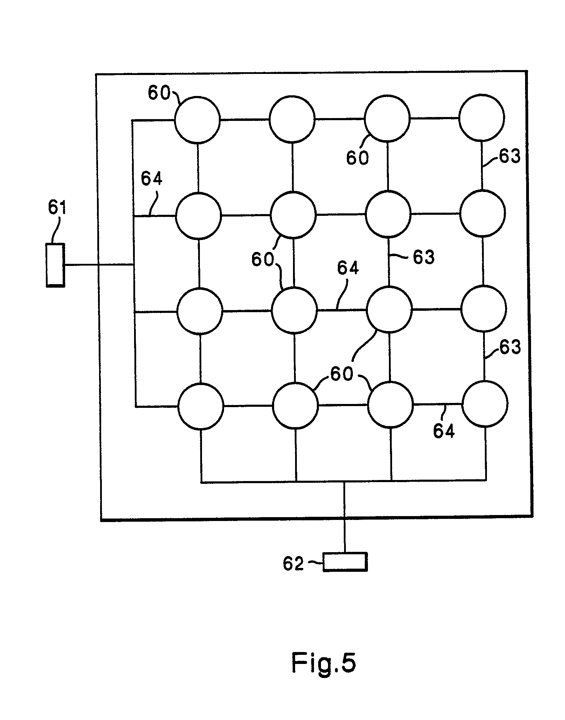

Another suitable construction for the pair of antennas 12 and 13 is shown in greater detail in Figure 5. A single array of dual polarised resonant micro-strip elements some of which are designated 60 forms both the antennas 12 and 13. The elements are connected with matching and power distribution lines some of which are designated 63 and 64 to make the array capable of the same performance as the horn type antennas. The array shown has two feeds 61 and 62 to allow for dual polarisation in the respective horizontal and vertical directions. The elements and feeds are positioned on one side of a thin dielectric layer with a conducting ground plane on the other side, and they may be etched from dielectric clad with copper on both sides. Each element has dimensions which make it resonant at the frequency of operation; in this example 2.45 GHz. A micro-strip array has the advantage that it is a flat plate antenna and can be conveniently mounted on the front of the roadside beacon unit 11.

The dual polarised micro-strip antenna 21 comprises a conducting ground plane separated from a plane conductor of dimensions which give resonant properties at 2.45 GHz by a thin layer of dielectric material. The plane conductor may be disc-shaped, the disc radius being the dimension which gives resonance, or it may for example be rectangular in plan. The matching lines 22 and 23 match the antenna impedance to a convenient value, such as 50 Ohms, for the radio frequency switches and may be quarter-wave transformers in the form of micro-strip lines. For the disc antenna the matching lines are connected to the edge of the disc at positions which are angularly spaced by 90°. Such an antenna provides, or selectively receives, one linear polarisation when fed at one of the positions and an orthogonal linear polarisation at the other position. By feeding at both positions simultaneously but with a 90° delay to one position, circular polarisation is achieved. (Note that opposite circular polarisations are orthogonal.) For a rectangular resonant conductor the matching lines are connected at adjacent corners of the rectangle, and if properly dimensioned, the antenna provides, or selectively receives, one circular polarisation from a single feed position and an orthogonal circular polarisation at the other feed position. In another feed arrangement the lines 22 and 23 are replaced by coaxial conductors having the outer conductor connected to the ground plane of the antenna and the centre conductor passing through an aperture in the ground plane and connected to the plane conductor at a point where a convenient impedance, such as 50 Ohms, occurs.

Commercially available components, such as PIN diode switches, may be used for the radio frequency switches 24 and 25 (and in the switch unit 72) and these components may be mounted on a board which has a ground plane on one side of a dielectric layer and conductors on the other side forming the plane conductor for the micro-strip antenna, the matching lines 22 and 23, the line 31 and connections to the diode detectors 26 and 27. Connections controlling the radio frequency switches are also formed by conductors on the dielectric surface, opposite the ground plane. The diode detectors may be Schottky diodes and their outputs are passed to respective filters (not shown) formed according to known techniques by arrangements of resonant lengths of conductor on the dielectric surface opposite the ground plane. The summation device 28 may be a resistor summing junction and an operational amplifier and the diode detectors are connected in a sense which gives a bipolar signal (as is explained below) at the output of the device 28. The received data signal in the form of the bipolar signal is passed to the signal processing stage 29 and finally to the micro-computer 30. Retransmit data from the micro-computer is used to modulate the two radio frequency switches 24 and 25.

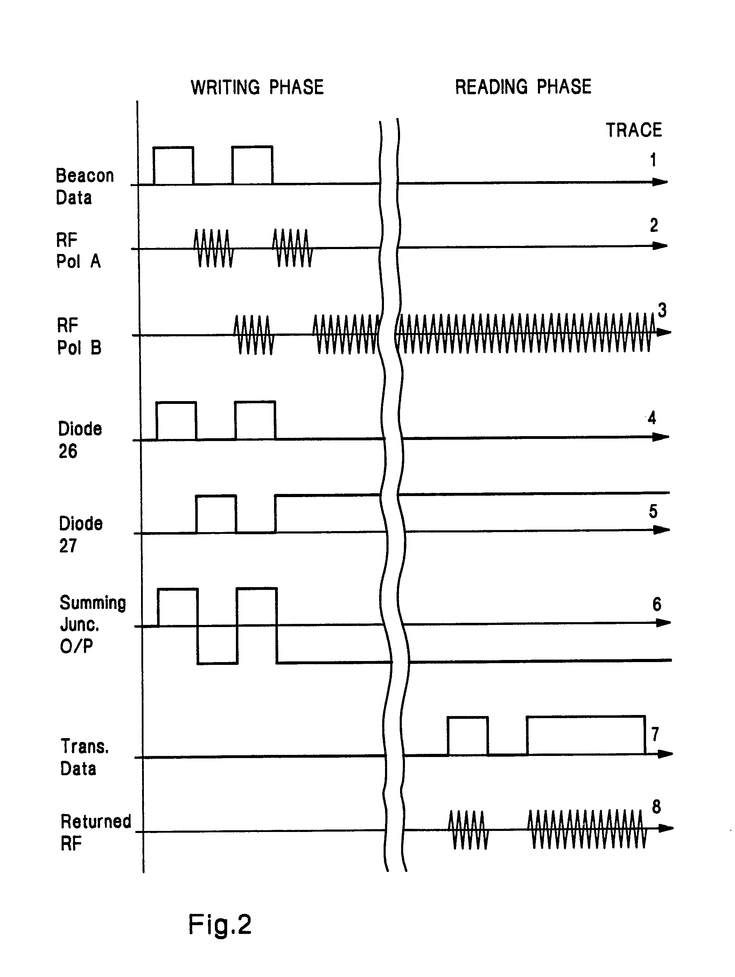

The operation of the system for the transmission and reception of electric signals carrying information between the roadside beacon and the transponder on board the road vehicle will now be described in greater detail, with particular reference to the timing diagram shown in Figure 2.

In a writing phase when data is to be passed from the roadside beacon unit 11 to the transponder, a radio frequency carrier is modulated and passed to the two roadside antennas 12 and 13. These two antennas are arranged to emit orthogonal polarised waves which may, for example, be linear or circularly polarised. In Figure 2, a waveform 1 shows beacon data to be transmitted, and waveforms 2 and 3 show the modulated radio frequency channels A and B which are transmitted by the roadside beacon's antennas 12 and 13 respectively. The carrier from the local oscillator 70 reaches the radio frequency switch unit 72 where it is switched to one of the antennas 12 and 13 depending on control signals applied by the micro-computer 77 to the control connections 75 and 76, the control signals being determined by the data of waveform 1.

The two orthogonally polarised waves are received by the transponder's antenna 21 which separates the two polarisations back into the two channels A and B. During the writing phase the two radio frequency switches 24 and 25 are controlled by the micro-computer 30 to allow the received data signals to be passed to the two diode detectors 26 and 27 and the demodulated waveform outputs are shown in waveforms 4 and 5 respectively. These two signals are then combined in the summation device 28 and the resultant bipolar signal is shown as waveform 6. Here a positive output corresponds to a logic 1 and a negative output corresponds to a logic 0. This signal is then passed through the signal processor 29 where it is amplified and filtered, and finally data is written into the micro-computer 30.

In the reading phase when data is passed from the transponder to the roadside beacon 11, the beacon transmits an unmodulated carrier on a single polarisation as shown in waveform 3. For this purpose the switch unit 72 passes the output of the local oscillator 70 to the antenna 13. The unmodulated carrier is received by the transponder's antenna 21 and passed to the radio frequency switch 25. Under the condition of the retransmit data being a logic 0 then both switches 24 and 25 allow the signal to pass between the antenna and diode detectors only. However during a logic 1 then the micro-computer 30 controls the switches to allow a microwave signal to pass from the antenna 21 via the line 23, the switch 25 and the line 31 to the switch 24 and back to the antenna 21 via the line 22. The transponder's data is shown in a waveform 7 and the returned modulated signal is shown in a waveform 8. Thus the received carrier is, in modulated form, transferred into the orthogonal polarisation and provides a retransmission signal. The roadside beacon unit 11 receives the retransmission signal at the antenna 12 where it is switched by the unit 72 to the mixer 74 for demodulation, the data being amplified and filtered by the processing circuit 78 and passed to the micro-computer 77. The mixer 74 is used because it provides better sensitivity than a diode detector for the relatively weak retransmitted signal.

Another use of the system for transmission and reception of electric signals carrying information between a roadside beacon and a transponder on board a vehicle is shown in Figure 3 as applied to car parks, for the collection of tolls. As shown a beacon unit 41 is located at the entrance to a car park 44. As a road vehicle 42 travelling along the entrance road 43 to the car park 44, passes the beacon unit 41, the beacon unit 41 interrogates the vehicle's transponder and checks for prepaid credit units held by storage in its micro-computer. If valid the beacon unit 41 writes into the transponder the date and time of entry and allows the vehicle to pass into the car park 44.

On exit from the car park the beacon unit 41 reads the entry time and date from the vehicle mounted transponder and deducts the appropriate amount of credit units from the transponder storage. An indication of this transaction is also given to the user, along with the amount of unused credit units remaining in the transponder.

Referring back to the first example of the roadside beacon unit and transponder, this has many other uses such as for road tolls on motorways. The use of an on board single chip micro-computer can give the system both intelligence and flexibility. For example, the same basic circuitry can be used for a number of different applications with the only modification required being the use of a different application program. The use of a micro-computer also allows easy expansion of the basic transponder to either a larger computer based system or display unit for route guidance systems or other contactless smart cards.

To guarantee integrity and freedom of operation it is desirable to have the transponder self contained, including its own power supply unit. The desired life span, of say five years, therefore requires a fair amount of stored capacity when the power consumption of the signal processor and micro-computer is taken into account. A dual power supply unit consisting of rechargeable cells and a strip of solar cells may be used to meet this requirement. Even with a small amount of surface area of solar cells sufficient power can be obtained to run the complete transponder, in an active state, and also trickle charge the rechargeable cells. During low light levels or darkness the operation is dependent on the stored capacity.

The invention may be put into practice in many other ways than those specifically described and has many other applications. For example in one form the transponder may be a prepaid card which can simply be lodged in a vehicle's windscreen for transmission to and from roadside beacons. Other forms of modulation may be used in the transponder, such as frequency shift keying.

## Claims

1. Apparatus for transmitting and receiving information between two locations having
a first unit comprising
means for generating an input signal and its inverse relating to information to be transmitted, and
means for transmitting first and second orthogonally polarised waves by radio, the first and second waves conveying the input signal and its inverse; and
a second unit comprising
means for receiving the first and second orthogonally polarised radio waves and deriving first and second signals representing the input signal and its inverse, and
means for combining the first and second signals to obtain an output signal.

2. Apparatus according to Claim 1 wherein the means for transmitting includes
means for modulating the input signal and its inverse on to respective carrier signals and
first antenna means for receiving the carrier signals and radiating the first and second waves; and wherein
the means for receiving includes
second antenna means for receiving the first and second waves, and demodulating means for demodulating signals at the receive antenna means to provide the first and second signals.

3. Apparatus according to Claim 2 wherein the demodulating means comprises first and second rectifiers coupled to receive respective signals induced in the second antenna means and output the first and second signals, and
the means for combining is a summation circuit arranged to provide the output signal as a bipolar signal.

4. Apparatus according to any preceding claim including, in the first unit, means for transmitting a continuous third wave having a single polarisation when information is to be transmitted from the second unit, and
in the second unit,
means for receiving the third wave and providing a consequent continuous unmodulated carrier signal from the third wave,
modulation means for modulating the carrier signal in accordance with information to be transmitted from the second unit, and
means for transmitting a fourth wave to the first unit with a polarisation orthogonal to the third wave, the fourth wave conveying the modulated carrier signal.

5. Apparatus according to Claim 4 insofar as dependent on Claim 2 wherein
the means for transmitting the third wave includes the first antenna means,
the means for receiving the third wave includes the second antenna means, and
the means for transmitting the fourth wave also includes the second antenna means.

6. Apparatus according to Claim 5 insofar as dependent on Claim 3 wherein
the second antenna means has two output channels, one of which provides an antenna output signal when waves of one polarisation are received and the other of which provides an output signal when waves of another polarisation, orthogonal to the said one polarisation are received, and
the modulation means includes two radio-frequency switches each having a first port which can be connected to a second port or a third port, the first ports of the switches being connected to respective ones of the said output channels, the second ports being coupled together and the third ports being connected to respective ones of the first and second rectifiers.

7. Apparatus according to any preceding claim wherein the transmitter and receiver are arranged for movement relative to one another.

8. Apparatus for transmitting information comprising means for generating an input signal and its inverse relating to information to be transmitted, and means for transmitting first and second orthogonally polarised waves by radio, the first and second waves conveying the input signal and its inverse.

9. Apparatus according to Claim 8 constituting a first unit including
means for transmitting a continuous third wave having a single polarisation when information is to be transmitted from a second unit which, in operation, modulates a signal derived from the third wave and transmits a fourth wave to the first unit derived from the modulated signal.

10. Apparatus for receiving information carried by first and second orthogonally polarised radio waves, the waves conveying an input signal containing the information, and the inverse of the signal, respectively, and the apparatus comprising
means for receiving the first and second orthogonally polarised radio waves and deriving first and second signals representing the input signal and its inverse, and
means for combining the first and second signals to obtain an output signal.

11. Apparatus according to Claim 10 wherein the means for receiving the first and second waves include antenna means, and rectifier means coupled to the antenna means which, in operation, output the first and second signals; and wherein the means for combining is a summation circuit arranged to provide the output signal as a bipolar signal.

12. Apparatus according to Claim 10 or 11 constituting a second unit comprising
means for receiving a continuous wave having a single polarisation from a first unit and providing a consequent continuous unmodulated carrier signal therefrom,
modulation means for modulating the carrier signal in accordance with information to be transmitted from the second unit, and
means for transmitting a return wave to the first unit with a polarisation orthogonal to the continuous wave, the return wave conveying the modulated carrier signal.

13. Apparatus according to Claim 12 insofar as dependent on Claim 11 wherein
the means for receiving the continuous wave and the means for transmitting the return wave also include the antenna means,
the antenna means has two output channels one of which provides an antenna output signal when waves of one polarisation are received and the other of which provides an output signal when waves of another polarisation, orthogonal to the said one polarisation are received, and
the modulation means includes two radio-frequency switches each having a first port which can be connected to a second port or a third port, the first ports of the switches being connected to respective ones of the said output channels, the second ports being coupled together and the third ports being connected to respective ones of the first and second rectifiers.

14. Apparatus according to Claim 11 or 12 wherein the antenna means comprises a dual polarised strip antenna.

15. A method for transmitting and receiving information between two locations, including
at the first location the steps of
generating an input signal and its inverse relating to information to be transmitted,
transmitting first and second orthogonally polarised waves by radio, the first and second waves conveying the input signal and its inverse,
and at the second location the steps of
receiving the first and second orthogonally polarised radio waves,
deriving first and second signals representing the input signal and its inverse from the waves, and
combining the signals to obtain an output signal.

16. A method according to Claim 15 including the step at the first location of
modulating the input signal and its inverse on to respective carrier signals, the first and second waves resulting from radio transmission of the carrier signals,

wherein, at the second location,

deriving the first and second signals includes demodulating signals resulting from the reception of the waves, and

combining the first and second signals provides the output signal as a bipolar signal.

17. A method according to Claim 15 or 16 including the steps of

transmitting a continuous unmodulated third wave having a single polarisation from the first location when information is to be transmitted from the second location,

receiving the third wave at the second location and providing a consequent continuous unmodulated carrier signal from the third wave,

modulating the carrier signal in accordance with information to be transmitted from the second unit, and

transmitting a fourth wave from the second location to the first location with a polarisation orthogonal to the third wave, the fourth wave conveying the modulated carrier signal.

Fig.1

EP 0 368 545 A1

Fig.2

Fig.3

Fig.4a

Fig.4b

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 115 385 (FUJITSU) <br> * Page 4, line 31 - page 6, line 26; figures 1-10 * | 1-3,6-8 ,10,11, 13,15, 16 | G 01 S 13/76 <br> G 01 S 13/82 <br> G 01 S 7/02 <br> H 04 B 7/10 // <br> H 01 Q 25/00 |
| Y | | 14 | |
| | --- | | |
| X | US-A-3 144 647 (SICHAK) <br> * Column 2, line 54 - column 5, line 51 * | 10 | |
| A | | 1-3,8, 11,15 | |
| | --- | | |
| X | US-A-2 992 427 (FRANCO) <br> * Column 1, line 63 - column 4, line 30 * | 1-3,6-8 ,10,11, 13,15 | |
| A | | 17 | |
| | --- | | |
| Y | US-A-4 242 661 (HENOCH et al.) <br> * Column 8, line 44 - column 11, line 17 * | 14 | |
| A | | 1-13,15 -17 | TECHNICAL FIELDS SEARCHED (Int. Cl.5) |
| | --- | | |
| A | EP-A-0 247 612 (SHARP) <br> * Column 7, line 45 - column 11, line 26 * | 4,5,12, 17 | G 01 S <br> H 04 B |
| | --- | | |
| A | WO-A-8 400 263 (R.C.A.) <br> * Page 7, line 26 - page 11, line 24 * <br> --- | 1,8,10, 15 | |
| | | -/- | |

The present search report has been drawn up for all claims

| Place of search | Date of completion of the search | Examiner |
|---|---|---|
| THE HAGUE | 19-02-1990 | DEVINE J.J |

EPO FORM 1503 03.82 (P0401)

Application Number

EP 89 31 1281

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | RCA REVIEW, vol. 34, no. 4, December 1973, pages 566-579, Princeton, US; R. KLENSCH et al.: "A microwave automatic vehicle identification system" * Pages 566-570 * | 1-17 | |
| A | GB-A-1 039 174 (S.T.C.) * Whole document * | 1-17 | |
| A | FR-A-2 110 450 (INST. FÖR MIKROVAGSTEKNIK) * Whole document * | 1-17 | |

TECHNICAL FIELDS
SEARCHED (Int. Cl.5)

The present search report has been drawn up for all claims

| Place of search | Date of completion of the search | Examiner |
|---|---|---|
| THE HAGUE | 19-02-1990 | DEVINE J.J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)